# EUROPEAN PATENT SPECIFICATION

(11) **EP 1 375 028 B1**
(45) Date of publication and mention of the grant of the patent: **04.10.2006**
(21) Application number: 03076760.2
(22) Date of filing: 06.06.2003
(51) Int. Cl.: B22C 1/22

(54) **Binder systems for foundries**
Giessereibindersysteme
Systemes de liants de fonderie

(30) Priority: 10.06.2002 IT MI20021258
(43) Date of publication of application: 02.01.2004
(73) Proprietor: Cavenaghi SPA, 20020 Lainate (Milano) (IT)
(72) Inventor: Zennaro, Giorgio, 21047 Saronno (Varese) (IT)
(74) Representative: Pistolesi, Roberto

(56) References cited:
- EP-A- 0 638 380
- US-A- 4 273 700
- US-A- 4 448 907

## Description

The present invention relates to polyurethane systems to be used as binders in mixtures with sand or similar granular substances for the production of moulds or cores for use in foundries.

### PRIOR ART

The aforesaid binder systems for foundries normally consist of three components, namely a hydroxyl component, a polyisocyanate and a catalyst which are mixed with sand or similar granular substances for forming the cores or moulds around which or in which the molten metal is subsequently cast.

The hydroxyl component can be a phenolic resin, generally produced by condensation of a phenol with aldehydes, such as those described in US Patents 3,409,579, 3,676,392 and 3,485,797. Alternatively, the hydroxyl component can be a polyol, such as those described in international patent applications WO 97/05447 (polyether polyols) and WO 00/40351 (polyester polyols), or an amine polyol, such as those described in Italian patent IT-1121796.

The polyisocyanate, which can be either aliphatic or aromatic, must contain at least two NCO groups, representative examples of these polyisocyanates being hexamethylene diisocyanate, 4,4'-dicyclohexamethylene diisocyanate, 2,4 and 2,6-toluene diisocyanate, diphenylmethane diisocyanate, 1,5-naphthalene diisocyanate, triphenylmethane diisocyanate, xylene diisocyanate, and chlorophenylene-2,4-diisocyanate.

The catalyst is normally a tertiary amine. The methods for producing foundry cores or moulds are divided into two separate categories, namely the "cold-box" and the "no-bake" method, according to the process by which the hydroxyl and polyisocyanate component is introduced into the sand mixture.

In the cold-box method, the hydroxyl component and the polyisocyanate are mixed with the sand at ambient temperature, and the compound thus obtained is modelled into the required shape, after which the catalyst is added to promote the polyurethane formation reaction between the hydroxyl groups and the NCO groups, causing the curing of the core or mould. The catalysts which can be used in this method are highly volatile substances, normally tertiary amines, which are blown in vapour form into the mixture of sand, hydroxyl and polyisocyanate; the tertiary amines preferred for this purpose are trimethylamine, dimethylamine, triethylamine and dimethylisopropylamine.

In the no-bake method, the hydroxyl component, the polyisocyanate and the catalyst are mixed directly with the sand; in this case, to enable the compound to be modelled into the desired shape, the catalyst must be in the liquid state at ambient temperature and must also have a smaller catalytic capacity than that of the catalysts used in the cold-box method, so that the compound is not allowed to cure before it has been correctly modelled. The preferred catalysts for this purpose are generally tertiary amines. US-A-4 273 700 discloses a binder system for foundries comprising a resin binder composition containing an admixture of polyhydroxy polyols with a substantial portion of the polyols containing ether linkages.

It should be pointed out that the amine polyol-based binder systems described in Italian patent IT-1121796 do not require the use of catalysts and can only be used for the no-bake method; this is because the structures of amine polyols contain amine groups with catalytic action.

To facilitate the batching and mixing of the components and to produce a compound which is sufficiently fluid to be modelled correctly, the hydroxyl component and the polyisocyanate usually contain organic solvents; however, the difference in polarity between the two components considerably restricts the choice of organic solvents usable for this purpose: this is because polar solvents, whether protic or aprotic, are good solvents for the hydroxyl component but have poor compatibility with the polyisocyanate; conversely, apolar solvents, preferably aromatic, are excellent solvents for the polyisocyanate but are unsuitable for the hydroxyl component.

It is therefore preferable to overcome this problem by using mixtures of solvents such that the hydroxyl component and the polyisocyanate form stable solutions and such that a fluid compound is generated with the sand, without demixing or phase separation.

The hydroxyl component contains mixtures of polar organic solvents selected from dialkyl esters such as dialkyl phthalates, dialkyl glutarates, dialkyl succinates and dialkyl adipates, usually combined with high-boiling aromatic hydrocarbons. On the other hand, the polyisocyanate contains apolar organic solvents or mixtures of these, generally in a proportion ranging from 20% to 40% by weight; these solvents are preferably selected from high-boiling aromatic hydrocarbons, such as substituted alkyl benzenes, xylenes and naphthalenes, frequently used in combination with vegetable oils (normally called siccative or semi-siccative oils), such as soya oil, linseed oil, turnip rape oil, coconut oil, colza oil, etc. As an alternative to the use of aromatic hydrocarbons, European patent application EP-A-771599 describes the use of fatty acid methyl esters having at least 12 carbon atoms in both components, while European patent application EP-A-1074568 describes the use of vegetable oils in the polyisocyanate-based component.

### DESCRIPTION OF THE INVENTION

Despite the use of catalysts with a smaller catalytic capacity, no-bake systems still have the disadvantage of having to be used within relatively short times, to ensure that the mixtures for forming foundry cores or moulds do not cure before the requisite modelling has been completed.

In particular, a no-bake system based on amine polyols such as those described in Italian patent IT-B-1121796 has the following disadvantages, especially in hot weather:
- it is impossible to decelerate the curing to the optimal level even if the addition of a catalyst is avoided (unlike phenolic polyols, non-phenolic polyols are not affected by the decelerating action of acid additives);
- the product becomes excessively rigid, making it difficult to extract the model (in the case of a mould), or to extract the cores from the core box (in the case of cores).

The object of the present invention is therefore to provide a binder system for foundries, of the no-bake type, comprising an amine polyol-based component (A), a polyisocyanate-based component (B) and optionally a catalyst (C), which is free of the drawbacks listed above.

It has now been discovered that this result can be obtained if the amine polyol is used in combination with a modifying agent which has a -OH functional group in the molecule so that it can combine with the -NCO groups of the polyisocyanate, but is less reactive than the amine polyol, so that it does not compete with it.

In particular, the modifying agents to be used in the binder systems forming the object of the present invention are substances known as glycol ethers, in other words monoethers of glycol, having the following structural formula, or mixtures of these:

R-[O-CH₂-CH₂]ₙ-OH

where R is an alkyl radical having from 1 to 12 carbon atoms, preferably from 1 to 6, or an aryl radical, and n is a number in the range from 1 to 6.

The modifying agents that can be used for the purposes of the invention must have a hydroxyl number in the range from 100 to 600 (preferably from 200 to 450), where the "hydroxyl number" is the number of milligrams of potassium hydroxide equivalent to the acetic anhydride consumed in the acetylation of one gram of product, and a functionality of 1, where "functionality" denotes the number of free hydroxyls per molecule.

Some examples of modifying agents in this category are:
butyldiglycol = monobutyl ether of diethylene glycol (hydroxyl number 346);
butyltriglycol = monobutyl ether of triethylene glycol (hydroxyl number 257);
monophenylglycol = monophenyl ether of monoethylene glycol (hydroxyl number 406).

The binder system according to the present invention the aforesaid glycol monoether is present in a proportion ranging from 15% to 45% by weight, with respect to the amine polyol.

The amine polyol that can be used for the purposes of the invention is an amine polyol of the type described in Italian patent IT-B-1121796; these amine polyols are the products of the reaction of an aliphatic or aromatic amine with ethylene oxide or propylene oxide, and preferably have the following characteristics:
- hydroxyl number: 200-1000 (preferably 400-800)
- functionality: more than 2

The solvent to be used in the amine polyol-based component is a mixture of esters selected from the dialkyl esters, described for example in US Patent 4,268,425, and fatty acid methyl esters having at least 12 carbon atoms, described for example in European patent application EP-A-771599; the presence of aromatic hydrocarbons is not excluded. The preferred dialkyl ester for the purposes of the present invention is DBE.

The polyisocyanate-based component (B) is not a defining element for the purposes of the present invention; it is therefore possible to use polyisocyanate-based components known in the art, such as those described in EP-A-771599 and EP-A-1074568. Preferably, the polyisocyanate is used in mixture of aromatic hydrocarbons, with fatty acid esters if necessary.

The catalyst (C) is not an essential component in a system based on amine polyols, which are self-curing. It is therefore normally used to accelerate curing, and preferably consists of a solution of a liquid tertiary amine and an organometallic tin compound in a mixture of aromatic hydrocarbons. The tertiary amine is preferably selected from N,N-dimethylcyclohexylamine and N,N-diethylcyclohexylamine, and the organometallic tin compound is preferably dibutyl tin dilaurate.

### EXAMPLES

### Part A (Polyol component)

### Example 1 (according to the invention)

| | |
|---|---|
| Temol H500^{™} | 40% |
| Butyltriglycol | 10% |
| Methyl ester of vegetable oils | 25% |
| DBE | 25% |
| Total | 100 |

### Example 1.a (according to the invention)

| | |
|---|---|
| Temol H500^{™} | 35% |
| Butyltriglycol | 15% |
| Methyl ester of vegetable oils | 25% |
| DBE | 25% |
| Total | 100 |

### Example 1.b (according to the invention)

| | |
|---|---|
| Temol H500^{™} | 40% |
| Butyldiglycol | 10% |
| Methyl ester of vegetable oils | 25% |
| DBE | 25% |
| Total | 100 |

### Example 1.c (according to the invention)

| | |
|---|---|
| Temol H500^{™} | 40% |
| Monophenylglycol | 10% |
| Methyl ester of vegetable oils | 25% |
| DBE | 25% |
| Total | 100 |

### Example 2 (control)

| | |
|---|---|
| Temol H500^{™} | 50% |
| Methyl ester of vegetable oils | 25% |
| DBE | 25% |
| Total | 100 |

### Part B (Isocyanate component)

| | |
|---|---|
| Baymidur K88 HV^{™} | 70% |
| Solvesso 150^{™} | 30% |
| Total | 100 |

### Part C (catalyst)

| | |
|---|---|
| N,N-dimethylcyclohexylamine | 8% |
| Dibutyl tin dilaurate | 1% |
| Solvesso 100^{™} | 91% |
| Total | 100 |

Temol H500^{™} is the trade name of an aromatic amine polyol with a hydroxyl number of 400-500, marketed by CPR. Butyltriglycol is the trade name of monobutyl ether of triethylene glycol. Butyldiglycol is the trade name of monobutyl ether of diethylene glycol. Monophenylglycol is the trade name of monophenyl ether of monoethylene glycol. The methyl ester of vegetable oils is the methyl ester of the fatty acids contained in colza oil, sunflower oil, or other vegetable oil; the product is marketed, for example, by Bakelite Italia. The DBE is a mixture of methyl esters of succinic, glutaric and adipic acids, marketed by Solutia Europe among others. Baymidur K88 HV^{™} is a mixture of isomers and homologues of diphenylmethane diisocyanate, marketed by Bayer. Solvesso 100^{™} and Solvesso 150^{™} are mixtures of aromatic hydrocarbons with boiling ranges of 163-179°C and 182-203°C respectively, marketed by Exxon Chemical.

### Composition of the control mixtures

| parts by weight of silica sand LA32 | |
|---|---|
| 0.5 parts by weight | Part A |
| 0.5 parts by weight | Part B |
| 5%(*) | Part C |

| | |
|---|---|
| (*) percentage of the quantity of Part A | |

The control mixtures, which differed from each other only in Part A, were used to prepare standard +GF+ bars.

The times shown for the start and end of hardening indicate that, where all other conditions are equal, Part A according to the invention (Examples 1, 1a, 1b, 1c) slows the curing rate considerably by comparison with the control Part A

### (Example 2).

| | Hardening | | Bending, kg/cm², after | | |
|---|---|---|---|---|---|
| | start | end | 1 hour | 2 hours | 24 hours |
| Example 1 | 13' | 16' | 12 | 19 | 31 |
| Example 1.a | 15' | 19' | 10 | 15 | 30 |
| Example 1.b | 12' | 17' | 11 | 14 | 28 |
| Example 1.c | 12' | 16' | 16 | 20 | 31 |
| Example 2 | 9' | 12' | 21 | 27 | 31 |

As will be appreciated, the bars produced according to the present invention have a slower curing rate than those produced according to the prior art (Example 2), with the consequent advantages according to the circumstances.

## Claims

1. Polyurethane binder system for foundries, of the no-bake type, comprising an amine polyol-based component, a polyisocyanate-based component and optionally a catalyst; wherein the amine polyol-based component contains its solvent and also a glycol monoether having the formula
R-[O-CH₂-CH₂]ₙ-OH
where R is an alkyl radical having from 1 to 12 carbon atoms, preferably from 1 to 6, or an aryl radical, and n is a number in the range from 1 to 6, or mixtures thereof, **characterized in that** the said glycol monoether is present in a proportion ranging from 15% to 45% by weight, with respect to the amine polyol and **in that** the solvent of the amine polyol-based component is a mixture of esters selected from dialkyl esters and fatty acid methyl esters having at least 12 carbon atoms.

2. Binder system according to Claim 1, **characterized in that** the said glycol monoether has a hydroxyl number in the range from 100 to 600, preferably from 200 to 450, and a functionality of 1.

3. Binder system according to Claim 1, **characterized in that** the said glycol monoether is selected from butyldiglycol, butyltriglycol and monophenylglycol and mixtures thereof.

4. Binder system according to Claim 1, **characterized in that** the said amine polyol is the product of the reaction of an aliphatic or aromatic amine with ethylene oxide or propylene oxide.

5. Binder system according to Claim 4, **characterized in that** the said amine polyol has a hydroxyl number in the range from 200 to 1000, preferably from 400 to 800, and a functionality of more than 2.

6. Binder system according to Claim 1, **characterized in that** the said catalyst is a solution of a liquid tertiary amine and an organometallic tin compound in a mixture of aromatic hydrocarbons.

7. Binder system according to Claim 6, **characterized in that** the said tertiary amine is selected from N,N-dimethylcyclohexylamine and N,N-diethylcyclohexylamine, and the organometallic tin compound is dibutyl tin dilaurate.

8. Binder system according to Claims 1 to 7, **characterized in that** the dialkyl ester is DBE.

9. Binder system according to Claim 8, **characterized in that** both DBE and fatty acid methyl esters having at least 12 carbon atoms are present in a proportion of 25% by weight, in the amine polyol based-component.

10. Use of a polyurethane binder system according to Claims 1 to 9 in the manufacture of cores and moulds for foundries.

11. Foundry cores and moulds which are produced by using the polyurethane binder system according to claims 1-9 in its manufacture.

## Patentansprüche

1. Kalthärtendes Polyurethan-Binder-System für Gießereien, das eine auf Aminopolyol basierende Komponente, eine auf Polyisocyanat basierende Komponente und gegebenenfalls einen Katalysator umfasst; wobei die auf Aminopolyol basierende Komponente ihr Lösungsmittel und außerdem einen Glykol-Monoether der Formel
R-[O-CH2-CH2]n-OH
enthält, wobei R eine Alkylgruppe ist, die 1 bis 12 Kohlenstoffatome aufweist, vorzugsweise zwischen 1 und 6, oder eine Arylgruppe, und n eine Zahl im Bereich von 1 bis 6, oder Mischungen davon, **dadurch gekennzeichnet, dass** der Glykol-Monoether in einem Anteil von 15 bis 45 Gewichtsprozenten anwesend ist, bezogen auf das Aminopolyol, und **dadurch**, dass das Lösungsmittel der auf Aminopolyol basierenden Komponente eine Mischung von Estern ist, die unter den Dialkylestern und Fettsäure-Methylestern, die mindestens 12 Kohlenstoffatome aufweisen gewählt werden.

2. Bindersystem nach Anspruch 1, **dadurch gekennzeichnet, dass** der Glykol-Monoether eine Hydroxylzahl im Bereich von 100 bis 600, vorzugsweise von 200 bis 450, und eine Wertigkeit von 1 aufweist.

3. Bindersystem nach Anspruch 1, **dadurch gekennzeichnet, dass** der Glykol-Monoether ausgewählt wird aus Butyldiglykol, Butyltriglykol und Monophenylglykol und deren Mischungen.

4. Bindersystem nach Anspruch 1, **dadurch gekennzeichnet, dass** das Aminopolyol das Produkt der Reaktion eines aliphatischen oder aromatischen Amins mit Ethylenoxid oder Propylenoxid ist.

5. Bindersystem nach Anspruch 4, **dadurch gekennzeichnet, dass** das Aminopolyol eine Hydroxylzahl im Bereich von 200 bis 1000, vorzugsweise von 400 bis 800, und eine Wertigkeit von mehr als 2 aufweist.

6. Bindersystem nach Anspruch 1, **dadurch gekennzeichnet, dass** der Katalysator eine Lösung eines flüssigen tertiären Amins und einer organometallischen Zinnverbindung in einer Mischung aromatischer Kohlenwasserstoffe ist.

7. Bindersystem nach Anspruch 6, **dadurch gekennzeichnet, dass** das tertiäre Amin gewählt wird unter N,N-Dimethylcyclohexylamin und N,N-Diethylcyclohexylamin, und die organometallische Zinnverbindung Dibutylzinndilaurat ist.

8. Bindersystem nach Ansprüchen 1-7, **dadurch gekennzeichnet, dass** der Dialkylester DBE ist.

9. Bindersystem nach Anspruch 8, **dadurch gekennzeichnet, dass** sowohl DBE als auch Fettsäuremethylester mit mindestens 12 Kohlenstoffatomen in einem Anteil von 25 Gewichtsprozenten in der auf Aminopolyol basierenden Komponente anwesend sind.

10. Verwendung eines Polyurethan-Binder-Systems nach einem der Ansprüche 1 bis 9 in der Herstellung von Kernen und Formen für Gießereien.

11. Gießereikerne und -formen, die unter Verwendung des Polyurethan-Binder-Systems nach den Ansprüchen 1-9 hergestellt werden.

## Revendications

1. Liant polyuréthane pour fonderies, de type durcissant à froid, comprenant un composant à base de polyol d'amine, un composant à base de polyisocyanate et, facultativement, un catalyseur ; dans lequel le composant à base de polyol d'amine contient son solvant ainsi qu'un monoéther de glycol de formule
R-[O-CH₂-CH₂]ₙ-OH
dans laquelle R est un radical alkyle ayant de 1 à 12 atomes de carbone, de préférence de 1 à 6, ou un radical aryle, et n est un nombre compris dans la plage allant de 1 à 6, ou leurs mélanges, **caractérisé en ce que** ledit monoéther de glycol est présent en une proportion allant de 15 % à 45 % en poids, par rapport au polyol d'amine, et **en ce que** le solvant du composant à base de polyol d'amine est un mélange d'esters choisis parmi les esters dialkyliques et les esters méthyliques d'acides gras ayant au moins 12 atomes de carbone.

2. Liant selon la revendication 1, **caractérisé en ce que** ledit monoéther de glycol a un nombre de groupes hydroxyle compris dans la plage allant de 100 à 600, de préférence de 200 à 450, et une fonctionnalité de 1.

3. Liant selon la revendication 1, **caractérisé en ce que** ledit monoéther de glycol est choisi parmi le butyldiglycol, le butyltriglycol et le monophénylglycol, et leurs mélanges.

4. Liant selon la revendication 1, **caractérisé en ce que** ledit polyol d'amine est le produit de la réaction d'une amine aliphatique ou aromatique avec l'oxyde d'éthylène ou l'oxyde de propylène.

5. Liant selon la revendication 4, **caractérisé en ce que** ledit polyol d'amine a un nombre de groupes hydroxyle compris dans la plage allant de 200 à 1000, de préférence de 400 à 800, et une fonctionnalité supérieure à 2.

6. Liant selon la revendication 1, **caractérisé en ce que** ledit catalyseur est une solution d'une amine tertiaire liquide et d'un composé organométallique d'étain dans un mélange d'hydrocarbures aromatiques.

7. Liant selon la revendication 6, **caractérisé en ce que** ladite amine tertiaire est choisie parmi la N,N-diméthylcyclohexylamine et la N,N-diéthylcyclohexylamine, et le composé organométallique d'étain est le dilaurate de dibutylétain.

8. Liant selon les revendications 1 à 7, **caractérisé en ce que** l'ester de dialkyle est l'ester dibasique.

9. Liant selon la revendication 8, **caractérisé en ce qu'**à la fois l'ester dibasique et les esters méthyliques d'acides gras ayant au moins 12 atomes de carbone sont présents dans une proportion de 25 % en poids, dans le composant à base de polyol d'amine.

10. Utilisation d'un liant polyuréthane selon les revendications 1 à 9 dans la fabrication de noyaux et de moules pour fonderies.

11. Noyaux et moules de fonderie qui sont produits en utilisant du liant polyuréthane selon les revendications 1 à 9 dans pour leur fabrication.
